Europäisches Patentamt

European Patent Office

Office européen des brevets

(19)

(11) Publication number: **0 434 164 A2**

(12) # EUROPEAN PATENT APPLICATION

(21) Application number: **90203376.0**

(22) Date of filing: **18.12.90**

(51) Int. Cl.⁵: **A23D 9/00,** A23L 1/01

(30) Priority: **21.12.89 EP 89203307**

(43) Date of publication of application:
**26.06.91 Bulletin 91/26**

(84) Designated Contracting States:
**AT BE CH DE DK ES FR GB GR IT LI NL SE**

(71) Applicant: **UNILEVER NV**
**Burgemeester s'Jacobplein 1 P.O. Box 760**
**NL-3000 DK Rotterdam(NL)**
(84) **BE CH DE DK ES FR GR IT LI NL SE AT**

Applicant: **UNILEVER PLC**
**Unilever House Blackfriars P.O. Box 68**
**London EC4P 4BQ(GB)**
(84) **GB**

(72) Inventor: **Van der Heijden, Arnoldus**
**Unilever Res. Lab., Olivier van Noortlaan 120**
**NL-3133 AT Vlaardingen(NL)**
Inventor: **Mostert, Krijn**
**Unilever Res. Lab., Olivier van Noortlaan 120**
**NL-3133 AT Vlaardingen(NL)**
Inventor: **Van Oosten, Cornelis Willem**
**Unilever Res. Lab., Olivier van Noortlaan 120**
**NL-3133 AT Vlaardingen(NL)**

(74) Representative: **Keppels, Willem Richard**
**Engelbertus Gerardus, Drs. et al**
**Unilever N.V. Patent Division P.O.Box 137**
**NL-3130 AC Vlaardingen(NL)**

(54) Frying-fat composition.

(57) The present invention is concerned with a fat composition suitable for frying, comprising at least 60 wt.% of fat, wherein the fat essentially consists of a mixture of one or more non-digestible polyol fatty acid polyesters and optionally triglyceride fat and the fat comprises from 0.1-50 ppm silicon oil and from 1 to 1000 ppm of an anti-oxidant selected from the group of tocopherols, tocopherol derivatives, tocopherol precursors and mixtures thereof.

We have found that off-flavour generation observed when a fat composition containing polyol fatty acid polyesters is used in frying, can very effectively be retarded by the inclusion of an effective amount of, in combination, silicon oil and an anti-oxidant selected from the group of tocopherols, tocopherol derivatives, tocopherol precursors and mixtures thereof.

# FRYING-FAT COMPOSITION

The present invention relates to fat compositions, and in particular to such compositions in which triglyceride fat has at least partly been replaced by non-digestible polyol fatty acid polyester. More particularly the present invention is concerned with fat compositions suitable for use in frying.

In the western world 30 to 50% of the energy intake is due to the consumption of fats and oils. Of this amount about 40% is consumed as 'visible' fat, such as butter, margarine, lard, shortening and edible oils. A considerable proportion of the 'visible' fats is introduced into the average diet by consumption of food products which are baked or fried in frying oils or fats, such as chips, crisps, battered and crumbed meat and fish products, and the like.

In view of the health hazards connected to obesity and unbalanced fat-intake there is a continuous interest in food products having a reduced caloric content. An attractive route to reduction of the caloric content in food products, such as in particular frying oils or fats and products fried therein, is replacement of conventional digestible fats and oils by non-digestible fat substitutes.

Polyol fatty acid polyesters, and in particular, the sugar fatty acid polyesters, such as e.g. the sucrose fatty acid polyesters, are known as suitable low-calorie fat-replacers in edible products. Substantially indigestible for human beings they have physical and organoleptic properties very similar to triglyceride oils and fats conventionally used in edible products. Polyol fatty acid polyesters are also reported to have use as pharmaceutical agents e.g. in view of their ability to take up fat-soluble substances, such as in particular cholesterol, in the gastro-intestinal tract, and subsequently remove those substances from the human body.

Edible fat-containing products comprising indigestible polyol fatty acid polyesters are known in the art, and described in e.g. US 3,600,186, US 4,005,195, US 4,005,196, US 4,034,083 and EP 0 233 856, EP 0 236 288, and EP 0 235 836.

In US 4,005,196 and US 4,034,083 indigestible sucrose fatty acid polyesters in the diet are reported to interfere with the absorption of the fat-soluble vitamins A, D, E and K. It is taught to overcome possible vitamin mal-absorption effects by fortifying the sucrose fatty acid polyester containing compositions with fat-soluble vitamins.

In EP-A 0 287 157 the silicon oil is mentioned amongst a list of other ingredients as an ingredient which may be used in a frying medium comprising sugar fatty acid esters as a noncaloric or reduced calorie fat or to reduce polymerization.

When fat compositions containing polyol fatty acid polyesters are subjected to high temperatures, i.e. temperatures of at least 100°C, off-flavours are generated. These off-flavours are believed to result from the degradation of the polyol fatty acid polyesters.

We have found now that off-flavour generation observed at high temperatures can very effectively be retarded by the inclusion of an effective amount of, in combination, silicon oil and an anti-oxidant selected from the group of tocopherols, tocopherol derivatives, tocopherol precursors and mixtures thereof. Accordingly the present invention is concerned with a fat composition suitable for frying, comprising at least 60 wt.% of fat, wherein the fat essentially consists of a mixture of one or more non-digestible polyol fatty acid polyesters and optionally triglyceride fat and the fat comprises from 0.1-50 ppm silicon oil and from 1 to 1000 ppm of an anti-oxidant selected from the group of tocopherols, tocopherol derivatives, tocopherol precursors and mixtures thereof.

Both silicon oil and the above anti-oxidant, when used separately in frying fat per se, may have a positive effect in that they retard off-flavour formation on frying. We have found, unexpectedly, that these two ingredients, when used in combination, slow down the formation of off-flavours during frying to such an extent, that a synergistic interaction is believed to be present.

According to a preferred embodiment of the invention the fat comprises from 0.3-30 ppm, more preferably from 0.5-20 ppm silicon oil. As regards the anti-oxidant, in a preferred embodiment the fat comprises from 50 to 800 ppm, preferably from 200 to 800 ppm of the anti-oxidant. In particular when the preferred concentration ranges for silicon oil and anti-oxidant are utilized in combination, a very pronounced retarding effect on the off-flavour generation is observed.

The anti-oxidant present in the fat composition according to the invention preferably is selected from the group consisting of alpha-tocopherol, esters of alpha-tocopherol and mixtures thereof. Particularly preferred esters of alpha-tocopherol are alpha-tocopherol acetate and succinate.

According to another preferred embodiment of the invention the silicon oil is selected from the group consisting of polydimethylsiloxane, polydiethylsiloxane and mixtures thereof. The latter siloxanes preferably possess a mainly linear structure. The average number of monomer units in the molecules constituting the silicon oil preferably exceeds 10. The average molecular weight of the silicon oil can suitably lie in the range of 1000 to 2500.

The present fat composition preferably contains at least 20 wt.% of triglyceride fat. Problems of surface fattiness, poor drip-off and mildewing polyol fatty acid polyester observed for frying fat compositions containing high levels of polyol fatty acid polyester can be overcome by using a frying fat composition, which comprises, in addition to a polyol fatty acid polyester, a substantial amount of triglyceride fat having a slip melting point of below 40°C. Advantageously this triglyceride fat has a slip melting point in the range of 10-35°C.

The slip melting point of a fat or fatty substance can be conveniently defined as the temperature at which the amount of solid phase in a melting fat or fatty substance has become so low that an air bubble is forced upwards in an open capillary filled with the fat or fatty substance.

The utilization of a relatively low melting triglyceride fat in combination with polyol fatty acid polyester is particularly beneficial when the mixture of polyol fatty acid polyesters has a slip melting point in the range of 35° to 50°C, as the use of such high melting polyesters gives rise to pronounced drip-off and mildewing problems.

In this specification the term 'polyol' is intended to refer to any aliphatic or aromatic compound which comprises at least four free hydroxyl groups. Such polyols in particular include the group of sugar polyols, which comprises the sugars, i.e. the mono-, di-and polysaccharides, the corresponding sugar alcohols and the derivatives thereof having at least four free hydroxyl groups. Examples of sugar polyols include glucose, mannose, galactose, xylose, fructose, sorbose, tagatose, ribulose, xylulose, maltose, lactose, cellobiose, raffinose, sucrose, erythritol, mannitol, lactitol, sorbitol, xylitol and alpha-methylglucoside. A generally used and preferred sugar polyol is sucrose.

In this specification by 'non-digestible' is meant that at least about 70% by weight of the material concerned is not digested by the human body.

In this specification, unless otherwise indicated, the term 'fat' refers to edible fats and oils consisting essentially of triglycerides, and which may be of animal, vegetable or synthetic origin. The terms fat and oil are used interchangeably.

Preferably, the mixture of polyol fatty acid polyesters in the present composition has a slip melting point in the range of 35 to 48°C, more preferably in the range of 35 to 45°C. Most preferably the mixture of polyol fatty acid polyesters has a slip melting point in the range of 37 to 42°C.

The use of high melting polyol fatty acid polyester in the present fat composition may lead to premature solidification of fat upon cooling down. Polyol fatty acid polyesters wherein the statistical variance in carbon chain length of the fatty acid residues of the polyol fatty acid polyesters is more than 4.3, or preferably even more than 5.0, crystallize relatively slowly. According to a very preferred embodiment of the present invention the mixture of polyol fatty acid polyesters consists of polyesters of the latter type. Fat compositions comprising such slowly crystallizing polyesters show a reduced tendency to prematurely crystallize onto utensils etc.

Preferably more than 70% of the fatty acid residues in the polyol fatty acid polyesters are saturated fatty acid residues. More preferably at least 85% of said fatty acid residues are saturated fatty acid residues.

Low melting triglyceride fat is included in the fat composition to increase the drip-off after frying to an acceptable level. In general triglyceride fat is not included in an amount of over 75% by weight in order to benefit sufficiently from the calorie reduction due to the indigestible polyester.

We have found it advantageous to combine relatively high melting polyol fatty acid polyesters with relatively low melting glyceride fats. The glyceride fats used in the present frying fat composition suitably melt at a temperature below body temperature. Accordingly in a preferred embodiment of the invention the blend of glyceride fats has a slip melting point below 35°C. Particularly good products, i.e. products that show essentially no mildewing, exhibit no drip-off problems and have very good frying properties are frying fat compositions containing glyceride fats having a slip melting point below 30°C.

For reasons of oxidative stability it is preferred that the glyceride fat has a slip melting point of at least 10°C. More preferably the glyceride fat has a slip melting point of at least 20°C. The combination of glyceride fat having a slip melting point of at least 20°C with polyol fatty acid polyesters having a slip melting point of above 35°C enables the preparation of plastic frying fat compositions which can be packaged in wrappers.

The present fat composition preferably comprises 40% to 70% by weight of polyol fatty acid polyesters and 60% to 30% by weight of glyceride fats. More preferably the composition comprises 55% to 70% by weight of polyol fatty acid polyesters and 45% to 30% by weight of glyceride fats. If relatively high levels of polyol fatty acid polyesters are employed, a layer of fat remains around the fried products after frying, which layer does hardly drip off. Also these fat layers impart a fatty mouthfeel to such fried products, which mouthfeel is significantly thicker than that of triglyceride fats and hence even more undesirable.

Suitable triglyceride oils and fats include, optionally modified by partial hydrogenation and/or fractionation to provide the required melting characteristic, coconut oil, palmkernel oil, palm oil, butter fat, soybean oil, safflower oil, cotton seed oil, rapeseed oil, poppy seed oil, corn oil sunflower oil, tallow, lard and mixtures thereof. Of these oils palm oil, partially hardened rape seed oil and partially hydrogenated soybean oil are preferred.

When used in frying the present composition should not contain much water as otherwise violent spattering will be observed. Generally the fat composition according to the invention should contain less than 10 wt.% of water, preferably less than 3 wt.% of water.

Polyol fatty acid polyesters have been defined in general chemical terms hereinbefore. Preferably, polyol fatty acid polyesters derived from sugars or sugar alcohols are applied, and in particular, sugar fatty acid polyesters derived from disaccharides, such as sucrose.

In general fatty acids per se or naturally occurring fats and oils may be used as source for the fatty acid residues in the polyol fatty acid polyesters. If necessary, conventional techniques may be used to provide the required slip melting points. Suitably such techniques include full or partial hydrogenation, interesterification, transesterification and/or fractionation, and may be used before or after conversion of the polyols to polyol fatty acid polyesters. Suitable sources of the fatty acid residues are vegetable oils and fats, such as in particular partially or fully hydrogenated palm oils, palm kernel oils and soybean oils.

Polyol fatty acid polyesters are applied of which, on an average, more than 70% of the polyol hydroxyl groups have been esterified with fatty acids. Preferably polyol fatty acid polyesters are used with higher degrees of conversion, in particular polyol fatty acid polyesters of which, on an average, more than 85% or even over 95% of the polyol hydroxyl groups have been esterified with fatty acids.

The frying fat composition according to the present invention may comprise in addition to the polyol fatty acid polyesters and the glyceride fats minor ingredients conventionally found in frying oils. The present frying fat composition, for instance, can suitably contain emulsifiers such as mono- and di-glycerides and lecithin. Preferably emulsifier constitutes less than 3 wt.% of the product. More preferably the present frying fat composition contains less than 2 wt.% of emulsifier.

Another aspect of the present invention is the use of a frying fat composition, as described hereinbefore, for frying food products. When using the frying fat composition according to the invention for frying food products, suitably, frying temperatures in the range of 120-200°C are employed. The frying fat composition according to the invention can advantageously be used for both shallow and deep frying food products.

The invention is further illustrated by means of the following examples.

## EXAMPLE 1

Four samples (A, B, C and D) of 400 g sucrose fatty acid polyesters (fatty acid residues derived from touch-hardened soybean oil having a slip melting point of 28°C) were heated in circular stainless steel evaporating discs (ex Bochem Instruments GmbH, Weilburg-Waldhausen, F.R.G.). The discs had a content of 1155 ml, a diameter of 140 mm and were heated to 140°C with a hot-plate and a magnetic stirrer (length of 60 mm, 50 r.p.m.) for 45 minutes. The four samples had the following composition:

A. Pure sucrose fatty acid polyester

B. As A, but containing 2 ppm silicon oil, through inclusion of 60 ppm Posil TM (ex. Quest, the Netherlands, No. 86 15 817)

C. As A, but containing 200 ppm tocopherol (D-alpha-tocopherol, No. T-3634; 80% in soybean oil Ex Sigma, U.S.A.)

D. As A, but containing 2 ppm silicon oil and 200 ppm tocopherol (both of same origin as in samples B and C)

10g portions were taken from the heated samples A, B, C and D and poured into odourless glass beakers (content 100 ml.). The beakers were covered with aluminum foil, marked by a number to identify the samples, and put into a stove and equilibrated in there at a temperature of 40°C. The samples were taken directly from the stove to taste cabins where the odour of the samples was evaluated by an expert panel (20/21 members) under red light.

The samples were evaluated in paired comparisons by panel members who had been trained in off-odour detection. Each panel member was instructed to smell the odour from each beaker and to indicate which of the two samples had the strongest off-odour. All samples were tested according to a round robin test design, implying that all pairs were evaluated in random order.

The data obtained were statistically analyzed, using the method described by Bradley and Terry in Biometrika 39, 324-345 (1952) and Biometrics 32, 213-232 (1976). From these analyses the following ranking order, as regards the intensity of the off-odour, was obtained: B-A-C-D; indicating that B produced the strongest off-odour whereas D produced the weakest off-odour. The differences found between D and A and between D and B were significant at 5% level. The differences between the samples C,A and B were not significant at that level.

Thus it can be concluded from this test that neither silicon oil nor tocopherol has a significant diminishing effect on the off-odour generation from the above fat composition when said composition is subjected to frying conditions. The combination of the latter components, however, does have a significant effect.

EXAMPLE 2

Three samples (A, B and C) of 300 g sucrose fatty acid polyesters (fatty acid residues derived from a 53:47 blend of fully hardened palm kernel oil and fully hardened palm oil) were heated in Rost TM frying pans at 180°C for 3 hours. The three samples had the following composition:

A. Sucrose fatty acid polyester containing 200 ppm alpha-tocopherolacetate (ex Hoffmann la Roche, Switzerland)

B. Sucrose fatty acid polyester containing 4 ppm silicon oil (by inclusion of an adequate amount of Posil TM (ex. Quest, the Netherlands, No. 86 15 817)

C. Sucrose fatty acid polyester containing 200 ppm alpha-tocopherolacetate and 4 ppm silicon oil as in A and B

After the three hour heating the samples were left to cool to ambient temperature. After equilibration at a temperature of 40°C the samples were evaluated by a test panel consisting of 4 persons. All panel members found that sample A had the strongest off-flavour and that sample B was more pungent than sample C.

EXAMPLE 3

Three samples (A, B and C) of 400 g sucrose fatty acid polyesters (fatty acid residues derived from soybean oil hardened to a slip melting point of 28°C) were heated in Rost TM frying pans at 180°C for 3 hours. The three samples had the following composition:

A. Sucrose fatty acid polyester containing 200 ppm alpha-tocopherolacetate (ex Hoffmann la Roche, Switzerland)

B. Sucrose fatty acid polyester containing 4 ppm silicon oil (by inclusion of an adequate amount of Posil TM (ex. Quest, the Netherlands, No. 86 15 817)

C. Sucrose fatty acid polyester containing 200 ppm alpha-tocopherolacetate and 4 ppm silicon oil as in A and B

After the three hour heating the samples were left to cool to ambient temperature. After equilibration at a temperature of 40°C the samples were evaluated by a test panel consisting of 4 persons. All panel members found that sample C produced significantly less off-flavour than the other two samples. The intensity of the off-flavour in these samples was found to be higher than in the corresponding samples of Example 2.

## Claims

1. A fat composition suitable for frying, comprising at least 60 wt.% of fat, wherein the fat essentially consists of a mixture of one or more non-digestible polyol fatty acid polyesters and optionally triglyceride fat and the fat comprises from 0.1-50 ppm silicon oil and from 1 to 1000 ppm of an anti-oxidant selected from the group of tocopherols, tocopherol derivatives, tocopherol precursors and mixtures thereof.

2. Fat composition according to claim 1, wherein the fat comprises from 0.3-30 ppm, preferably from 0.5-20 ppm silicon oil.

3. Fat composition according to claim 1 or 2, wherein the fat comprises from 50 to 800 ppm, preferably from 200 to 800 ppm of the anti-oxidant.

4. Fat composition according to any one of claims 1-3, wherein the fat composition contains at least 20 wt.% of triglyceride fat having a slip melting point in the range of 10-35°C.

5. Fat composition according to claim 4, wherein the triglyceride fat has a slip melting point of at least 20°C.

6. Fat composition according to any one of claims 1-5, wherein the mixture of polyol fatty acid polyesters has a slip melting point in the range of 35° to 50°C.

7. Fat composition according to any one of claims 1-6, wherein the statistical variance in carbon chain length of the fatty acid residues of the polyol fatty acid polyesters is more than 4.3, preferably more than 5.0.

8. Fat composition according to any one of claims 1-7, wherein the composition comprises 40% to 70% by weight of polyol fatty acid polyesters and 60% to 30% by weight of glyceride fats.

9. Fat composition according to claim 8, wherein the composition comprises 55% to 70% by weight of polyol fatty acid polyesters and 45% to 30% by weight of glyceride fats.

10. Fat composition according to any one of claims 1-9, wherein the fat composition contains less than 3 wt.% of water.

11. Use of a fat composition according to any one of claims 1-10 for frying food products.